# EUROPÄISCHE PATENTSCHRIFT

(11) **EP 1 291 233 B1**
(45) Veröffentlichungstag und Bekanntmachung des Hinweises auf die Patenterteilung: **02.11.2005**
(21) Anmeldenummer: 02018425.5
(22) Anmeldetag: 16.08.2002
(51) Int. Cl.: B60N 2/07

(54) **Längseinsteller für einen Fahrzeugsitz**
Longitudinal adjuster for a vehicle seat
Dispositif de réglage longitudinal pour un siège de véhicule

(30) Priorität: 01.09.2001 DE 10142994
(43) Veröffentlichungstag der Anmeldung: 12.03.2003
(73) Patentinhaber: KEIPER GmbH & Co. KG, 67657 Kaiserslautern (DE)
(72) Erfinder: Krebs, Jürgen, 67806 Rockenhausen (DE); Strubel, Peter, 55237 Flonheim (DE)
(74) Vertreter: Patentanwälte Hosenthien-Held und Dr. Held

(56) Entgegenhaltungen:
- EP-A- 0 090 701
- DE-A- 19 804 506
- DE-A- 19 922 294

## Beschreibung

Die Erfindung betrifft einen Längseinsteller für einen Fahrzeugsitz, insbesondere für einen Kraftfahrzeugsitz, mit den Merkmalen des Oberbegriffs des Anspruches 1.

Aus der DE 199 22 294 A1 ist ein Längseinsteller dieser Art bekannt, bei dem eine seitlich an der Fahrzeugstruktur angebrachte, erste Sitzschiene eine zweite Sitzschiene lagert und führt, welche seitlich am Fahrzeugsitz angebracht ist. Die zweite Sitzschiene weist ein Verkrallungsteil auf, mit dem sie zusammen die erste Sitzschiene umgreift, um im Crashfall ein Aufschälen zu verhindern. Das Verkrallungsteil wirkt dabei zugleich als Verstärkung der zweiten Sitzschiene.

Der Erfindung liegt die Aufgabe zu Grunde, einen Längseinsteller der eingangs genannten Art weiter zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Dadurch, daß am Verkrallungsteil ein dachförmiges Element ausgebildet ist, welches als Anschlag die Verschiebung in Längsrichtung begrenzt, erhält das Verkrallungsteil außer seiner Umkrallungs- und Versteifungsfunktion noch die Funktion eines Anschlags, ohne daß zusätzliche Bauteile notwendig sind. Die dachförmige Ausbildung versteift das als Anschlag wirkende dachförmige Element und bildet zugleich eine größere Anschlagsfläche.

Die bevorzugt einstückige Ausbildung des dachförmigen Elementes aus Laschen des Verkrallungsteils hält die Anzahl der zu montierenden Bauteile und damit den Montageaufwand gering. Das Verprägen der Laschen, d.h. das Umformen der Laschen und Ineinandergreifen von ausgeschnittenen Verzahnungen, erhöht die Festigkeit in Längsrichtung der Sitzschienen und sorgt für eine geringe Positionstoleranz, insbesondere bei Zähnen, die aufgrund rechteckiger Ausbildung formschlüssig ineinander greifen. Die Befestigungspunkte des Verkrallungsteils, beispielsweise in Form von Durchzügen, sind in Hinblick auf die Versteifungs- und Anschlagswirkung des dachförmigen Elementes vorzugsweise in unmittelbarer Nachbarschaft des dachförmigen Elementes angebracht.

Aus dem Verkrallungsteil können weitere Elemente heraus gebildet werden, beispielsweise angeformte Befestigungslaschen in wenigstens einem Endbereich, die vorzugsweise durch Umbiegen die Stärke des Verkrallungsteils erhöhen. Vorzugsweise werden die beiden Sitzschienen durch eine Verriegelungsvorrichtung miteinander verriegelt, welche im Verkrallungsteil gelagert ist. Mit den seitlich angebrachten Sitzschienen wird der Fahrzeugsitz tiefer gelegt, was insbesondere bei Sportwagen von Vorteil ist.

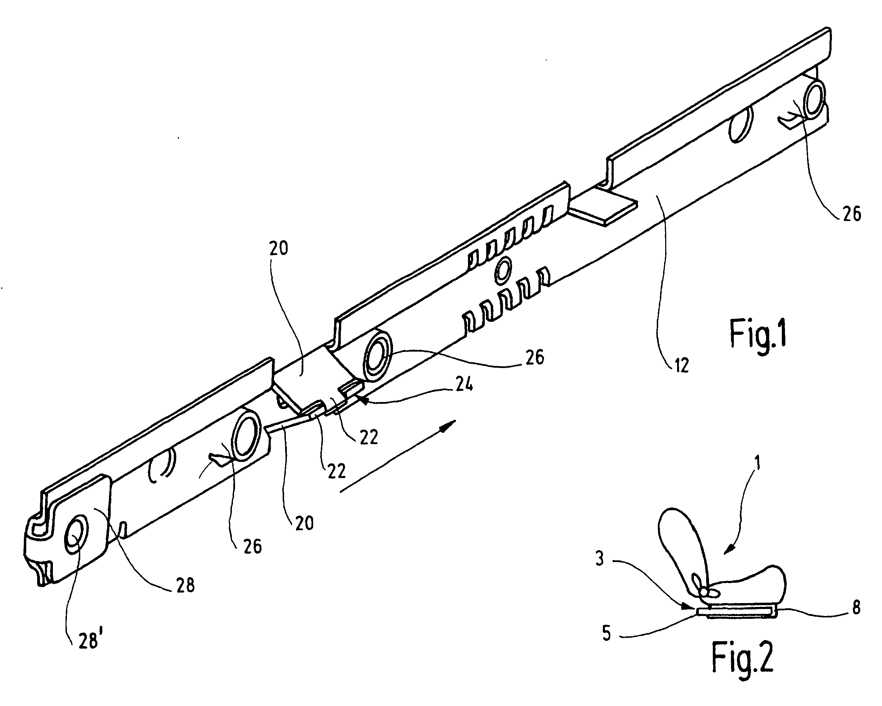

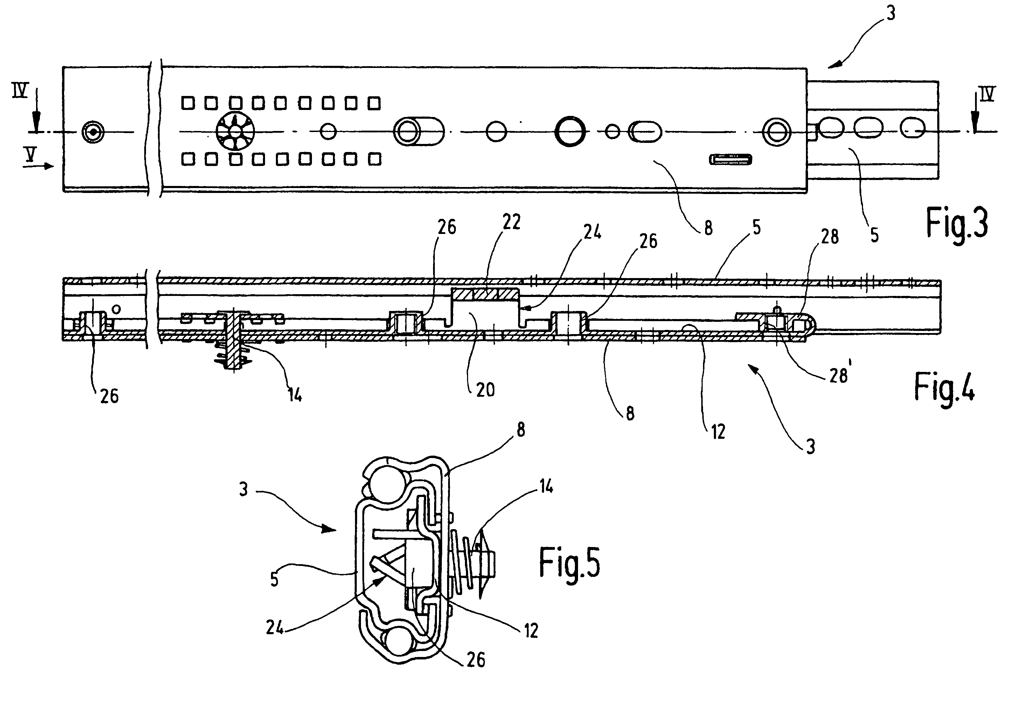

Im folgenden ist die Erfindung anhand eines in der Zeichnung dargestellten Ausführungsbeispiels näher erläutert. Es zeigen
- Fig. 1: eine perspektivische Ansicht eines Verkrallungsteils des Ausführungsbeispiels, wobei die Fahrtrichtung durch einen Pfeil angedeutet ist.
- Fig. 2: eine Seitenansicht eines erfindungsgemäß ausgerüsteten Fahrzeugsitzes,
- Fig. 3: eine Ansicht der zum Fahrzeugsitz gewandten Seite des Ausführungsbeispiels,
- Fig. 4: einen Schnitt entlang der Linie IV-IV in Fig. 3, und
- Fig. 5: eine stirnseitige Ansicht in Richtung des Pfeiles V in Fig. 3.

Eine Vorrichtung zur Längseinstellung eines Fahrzeugsitzes 1 ist im folgenden als Längseinsteller 3 bezeichnet. Die gewöhnliche Orientierung des Fahrzeugsitzes 1 in einem Kraftfahrzeug und dessen normale Fahrtrichtung definieren die nachfolgenden Richtungsangaben. Der Längseinsteller 3 weist auf jeder Seite des Fahrzeugsitzes 1 als erste Sitzschiene eine fahrzeugstrukturfeste Unterschiene 5 auf, welche seitlich am Schweller bzw. am Tunnel angebracht ist. Jede der näherungsweise C-förmigen Unterschienen 5 wird von einer ebenfalls näherungsweise C-förmigen Oberschiene 8 als einer zweiten Sitzschiene von außen her umgriffen, welche unter Zwischenlage von Kugeln gleitend auf der zugeordneten Unterschiene 5 geführt ist. Die sitzstrukturfeste Oberschiene 8 ist seitlich auf der von der Unterschiene 5 abgewandten Seite mit weiteren, nicht näher dargestellten Teilen des Unterbaus des Fahrzeugsitzes 1 verbunden.

Die Unterschiene 5 und die Oberschiene 8 bilden ein Schienenprofil, welches einen Bauraum definiert. Innerhalb dieses Bauraums ist ein Verkrallungsteil 12 vorgesehen, welches auf der Innenseite der Oberschiene 8 entlang deren hochkant verlaufender Wandung angeordnet und über mit der Oberschiene 8 gemeinsame Befestigungsmittel fest mit dem Unterbau des Fahrzeugsitzes 1 verbunden ist. Die Unterschiene 5 einerseits und die Oberschiene 8 mit dem Verkrallungsteil 12 andererseits sind in ihren in Längsrichtung verlaufenden Randbereichen so geformt, daß sie sich durch mehrfaches Hintergreifen wechselseitig umkrallen. Über die Verkrallungsbereiche werden im Crashfall die auftretenden Kräfte in die Fahrzeugstruktur geleitet, ohne daß die Gefahr eines Aufschälens der Schienen besteht.

Ungefähr in der Mitte des Verkrallungsteils 12 ist eine Verriegelungsvorrichtung 14 angeordnet. Eine Kralle der Verriegelungsvorrichtung 14 ist mittels eines Bolzens in einer Bohrung im Verkrallungsteil 12 und in der Oberschiene 8 gelagert und durch eine Druckfeder auf der Außenseite der Oberschiene 8 vorgespannt, wobei im verriegelten Zustand die Kralle mittels mehrerer Finger durch Rasten der Unterschiene 5, Öffnungen und/oder Ausnehmungen im Verkrallungsteil 12 und Öffnungen in der Oberschiene 8 greift.

Zwischen der Verriegelungsvorrichtung 14 und dem hinteren Ende des Verkrallungsteils 12 ist in Einbaulage von oben und von unten her je eine Lasche 20 aus dem Randbereich des Verkrallungsteils 12 zungenförmig ausgestanzt und durch Umbiegen in einem stumpfen Winkel seitlich ausgestellt. Die beiden Laschen 20 stammen also aus zwei einander gegenüberliegenden Längsrandbereichen des Verkrallungsteils 12. Bei jeder Lasche 20 ist an ihrem freien Rand eine Verzahnung 22 mit rechteckigen Zähnen eingeschnitten. Die beiden Laschen 20 greifen mit den Verzahnungen 22 ineinander und bilden eine geschlossene Form mit dreieckigem Querschnitt, im folgenden als dachförmiges Element 24 bezeichnet. Aufgrund der ineinandergreifenden Verzahnungen 22 sind die Laschen 20 sowohl im Winkel zueinander als auch in Längsrichtung fest zueinander ausgerichtet. Das dachförmige Element 24 ragt in den Bauraum des Schienenprofils und weist eine hohe Festigkeit bei geringer Positionstoleranz auf. Zusammen mit einem im Endbereich der Unterschiene 5 angebrachten Anschlag wirkt das dachförmige Element 24 als Endanschlag für die Bewegung der Oberschiene 8 in ihrer hintersten Position.

Vor und hinter dem dachförmigen Element 24 sind in dessen unmittelbarer Nähe zwei Durchzüge 26 im Verkrallungsteil 12 ausgebildet, d.h. mittels Verdrängung von Material des Verkrallungsteils 12 als hohler, seitlich abstehender Tubus angeformt. Die mit einem Innengewinde versehenen Durchzüge 26 dienen ebenso wie ein weiterer, gleich ausgebildeter Durchzug 26 am vorderen Ende des Verkrallungsteils 12 der Befestigung des Verkrallungsteils 12 und der Oberschiene 8 am weiteren Unterbau des Fahrzeugsitzes 1. Am hinteren Ende des Verkrallungsteils 12 ist über eine gegenüber der sonstigen Breite des Verkrallungsteils 12 schmalere Materialbrücke eine Befestigungslasche 28 angeformt, welche einen kurzen Durchzug 28' mit Innengewinde aufweist. Die Befestigungslasche 28 ist nach innen gebogen und dient als verstärkter Befestigungspunkt des Verkrallungsteils 12.

### Bezugszeichenliste

- 1: Fahrzeugsitz
- 3: Längseinsteller
- 5: Unterschiene, erste Sitzschiene
- 8: Oberschiene, zweite Sitzschiene
- 12: Verkrallungsteil
- 14: Verriegelungsvorrichtung
- 20: Lasche
- 22: Verzahnung
- 24: dachförmiges Element
- 26: Durchzug
- 28: Befestigungslasche
- 28': kurzer Durchzug

## Patentansprüche

1. Längseinsteller (3) für einen Fahrzeugsitz, insbesondere für einen Kraftfahrzeugsitz, mit einer ersten Sitzschiene (5), einer relativ zur ersten Sitzschiene (5) in Längsrichtung verschiebbaren zweiten Sitzschiene (8), und einem an der zweiten Sitzschiene (8) angeordneten Verkrallungsteil (12), wobei die erste Sitzschiene (5) einerseits und die zweite Sitzschiene (8) mit dem Verkrallungsteil (12) andererseits einander wechselseitig umgreifen, **dadurch gekennzeichnet, daß** am Verkrallungsteil (12) ein dachförmiges Element (24) ausgebildet ist, welches als Anschlag die Verschiebung in Längsrichtung begrenzt.

2. Längseinsteller nach Anspruch 1, **dadurch gekennzeichnet, daß** das dachförmige Element (24) aus zwei Laschen (20) des Verkrallungsteils (12) gebildet ist, welche aus dem Verkrallungsteil (12) ausgestellt sind.

3. Längseinsteller nach Anspruch 2, **dadurch gekennzeichnet, daß** die Laschen (20) aus einander gegenüberliegenden Längsrandbereichen des Verkrallungsteils (12) gebildet sind.

4. Längseinsteller nach Anspruch 2 oder 3, **dadurch gekennzeichnet, daß** an den zwei Laschen (20) jeweils eine Verzahnung (22) ausgebildet ist, wobei die Verzahnungen (22) aufeinander ausgerichtet sind.

5. Längseinsteller nach Anspruch 4, **dadurch gekennzeichnet, daß** die Verzahnungen (22) rechteckige Zähne aufweisen, mit denen die Verzahnungen (22) ineinander greifen.

6. Längseinsteller nach einem der Ansprüche 1 bis 5, **dadurch gekennzeichnet, daß** an einem Ende des Verkrallungsteils (12) eine Befestigungslasche (28) angeformt ist, die über eine relativ zur sonstigen Breite des Verkrallungsteils (12) schmalere Materialbrücke mit den weiteren Bereichen des Verkrallungsteils (12) verbunden ist.

7. Längseinsteller nach Anspruch 6, **dadurch gekennzeichnet, daß** die Befestigungslasche (28) relativ zum Verkrallungsteil (12) umgebogen ist, auf dem Verkrallungsteil (12) aufliegt und ein Mittel (28') zur Befestigung des Verkrallungsteils (12) aufweist.

8. Längseinsteller nach einem der Ansprüche 1 bis 7, **dadurch gekennzeichnet, daß** am Verkrallungsteil (12) Durchzüge (26, 28') zur Befestigung des Verkrallungsteils (12) ausgebildet sind, wobei zwei der Durchzüge (26) in unmittelbarer Nachbarschaft des dachförmigen Elementes (24) vorgesehen sind.

9. Längseinsteller nach einem der Ansprüche 1 bis 8, **dadurch gekennzeichnet, daß** die erste Sitzschiene (5) seitlich an der Fahrzeugstruktur und die zweite Sitzschiene (8) seitlich an der Struktur des Fahrzeugsitzes (1) anbringbar ist.

10. Fahrzeugsitz, insbesondere Kraftfahrzeugsitz, mit einem Längseinsteller nach einem der Ansprüche 1 bis 9.

## Claims

1. Longitudinal adjuster (3) for a vehicle seat, in particular for a motor vehicle seat, having a first seat rail (5), a second seat rail (8) which can be displaced in a longitudinal direction relative to the first seat rail (5), and an engaging member (12) which is arranged on the second seat rail (8), the first seat rail (5), on the one hand, and the second seat rail (8) with the engaging member (12), on the other hand, mutually engaging with each other, **characterised in that** a roof-like element (24) is formed on the engaging member (12) and restricts the movement in a longitudinal direction as a stop.

2. Longitudinal adjuster according to claim 1, **characterised in that** the roof-like element (24) is formed by two tabs (20) of the engaging member (12), which tabs (20) are positioned out of the engaging member (12).

3. Longitudinal adjuster according to claim 2, **characterised in that** the tabs (20) are formed by mutually opposite longitudinal edge regions of the engaging member (12).

4. Longitudinal adjuster according to claim 2 or 3, **characterised in that** a tooth arrangement (22) is formed in each case on the two tabs (20), the tooth arrangements (22) being directed towards each other.

5. Longitudinal adjuster according to claim 4, **characterised in that** the tooth arrangements (22) have rectangular teeth by means of which the tooth arrangements (22) engage in each other.

6. Longitudinal adjuster according to any one of claims 1 to 5, **characterised in that** a fixing tab (28) is formed at one end of the engaging member (12) and is connected to the other regions of the engaging member (12) by means of a material bridge having a narrower width than the remainder of the engaging member (12).

7. Longitudinal adjuster according to claim 6, **characterised in that** the fixing tab (28) is bent over relative to the engaging member (12), rests on the engaging member (12) and has a means (28') for fixing the engaging member (12).

8. Longitudinal adjuster according to any one of claims 1 to 7, **characterised in that** apertures (26, 28') for fixing the engaging member (12) are formed on the engaging member (12), two of the apertures (26) being provided directly beside the roof-like element (24).

9. Longitudinal adjuster according to any one of claims 1 to 8, **characterised in that** the first seat rail (5) can be fitted laterally to the vehicle structure, and the second seat rail (8) can be fitted laterally to the structure of the vehicle seat (1).

10. Vehicle seat, in particular a motor vehicle seat, having a longitudinal adjuster according to any one of claims 1 to 9.

## Revendications

1. Dispositif (3) de réglage en longueur pour un siège de véhicule, en particulier un siège de véhicule automobile, comprenant un premier rail de siège (5), un deuxième rail de siège (8) apte à se déplacer par rapport au premier rail de siège (5) dans le sens de la longueur, et une partie d'agrippement (12) disposée sur le deuxième rail de siège (8), le premier rail de siège (5) d'une part et le deuxième rail de siège (8) avec la partie d'agrippement (12) d'autre part, s'engrenant l'un avec l'autre réciproquement, **caractérisé par le fait que**, sur la partie d'agrippement (12), est formé un élément (24) en forme de toit, lequel, comme butée, limite le déplacement dans le sens de la longueur.

2. Dispositif de réglage en longueur selon la revendication 1, **caractérisé par le fait que** l'élément (24) en forme de toit est formé de deux colliers (20) de la partie d'agrippement (12), lesquels font saillie de la partie d'agrippement (12).

3. Dispositif de réglage en longueur selon la revendication 2, **caractérisé par le fait que** les colliers (20) sont formés à partir de zones de bordure longitudinales en vis-à-vis de la partie d'agrippement (12).

4. Dispositif de réglage en longueur selon l'une des revendications 2 ou 3, **caractérisé par le fait que**, sur les deux colliers (20), est formée à chaque fois une denture (22), les dentures (22) étant orientées l'une vers l'autre.

5. Dispositif de réglage en longueur selon la revendication 4, **caractérisé par le fait que** les dentures (22) présentent des dents rectangulaires avec lesquelles les dentures (22) s'engrènent l'une dans l'autre.

6. Dispositif de réglage en longueur selon l'une des revendications 1 à 5, **caractérisé par le fait que**, sur une extrémité de la partie d'agrippement (12), est formé un collier de fixation (28), qui est lié par l'intermédiaire d'un pont de matière plus étroit relativement à la largeur courante de la partie d'agrippement (12) avec les autres zones de la partie d'agrippement (12).

7. Dispositif de réglage en longueur selon la revendication 6, **caractérisé par le fait que** le collier de fixation(28) est replié relativement à la partie d'agrippement (12), porte sur la partie d'agrippement (12), et présente un moyen (28') pour la fixation de la partie d'agrippement (12).

8. Dispositif de réglage en longueur selon l'une des revendications 1 à 7, **caractérisé par le fait que**, sur la partie d'agrippement (12), sont formées des traverses (26, 28') pour la fixation de la partie d'agrippement (12), deux des traverses (26) étant prévues au voisinage immédiat de l'élément (24) en forme de toit.

9. Dispositif de réglage en longueur selon l'une des revendications 1 à 8, **caractérisé par le fait que** le premier rail de siège (5) est apte à être rapporté latéralement sur la structure du véhicule et le deuxième rail de siège (8) est apte à être rapporté latéralement sur la structure du siège de véhicule (1).

10. Siège de véhicule, en particulier siège de véhicule automobile, présentant un dispositif de réglage en longueur tel que défini à l'une des revendications 1 à 9.
